# EUROPEAN PATENT APPLICATION

(11) **EP 4 092 514 A1**
(43) Date of publication of application: **23.11.2022**
(21) Application number: 22173741.4
(22) Date of filing: 17.05.2022
(51) Int. Cl.: G06F 3/0481

(54) **SYSTEMS AND METHODS FOR ASYNCHRONOUS SUB-WINDOW INTERACTION IN APPLICATION VIEWS**

(30) Priority: 17.05.2021 US 202117322393
(71) Applicant: Google LLC, Mountain View, CA 94043 (US)
(72) Inventor: Yuen, Carlin, Mountain View, 94043 (US); Cortez, Ces, Mountain View, 94043 (US); Haddadnia, Justin, Mountain View, 94043 (US); Gleason, Tim, Mountain View, 94043 (US)
(74) Representative: Anderson, Oliver Ben

(57) **Abstract**

A method includes providing, for presentation on a screen of a client device, a user interface associated with a first session of an application, the user interface associated with the first session of the application comprising a plurality of content items; receiving, via the user interface associated with the first session of the application, a user selection of a first content item of the plurality of content items; providing, for presentation within the user interface associated with the first session of the application, a sub-window for the first content item while keeping at least a portion of the user interface associated with the first session of the application visible on the screen of the client device; receiving user input indicating a request to initiate a second session of the application; and in response to receiving the user input, causing a user interface associated with the second session of the application to be presented together with the sub-window for the first content item.

## Description

### TECHNICAL FIELD

The disclosed embodiments relate generally to productivity tools. More particularly, the disclosed embodiments relate to methods, systems, graphical user interfaces, and data structures for asynchronous sub-window interaction in an application view.

### BACKGROUND

Cloud computing services allow users to create, edit, share, and collaborate on files that are stored on the cloud computing service. Users connect to the cloud computing service over a remote network such as the Internet. Files that can be stored on the cloud computing service include word processing documents, spreadsheets, presentations, images, audio files, video files, and many other types of documents and files. The cloud computing service also provides document editing applications for displaying and editing certain files. These applications can be accessible on a client computer via, for example, a web browser executing on the client computer.

### SUMMARY

The following presents a simplified summary of various aspects of this disclosure in order to provide a basic understanding of such aspects. This summary is not an extensive overview of all contemplated aspects, and is intended to neither identify key or critical elements nor delineate the scope of such aspects. Its purpose is to present some concepts of this disclosure in a simplified form as a prelude to the more detailed description that is presented later.

An aspect of the disclosure provides a computer-implemented method comprising: providing, for presentation on a screen of a client device, a user interface associated with a first session of an application, the user interface associated with the first session of the application comprising a plurality of content items; receiving, via the user interface associated with the first session of the application, a user selection of a first content item of the plurality of content items; providing, for presentation within the user interface associated with the first session of the application, a sub-window for the first content item while keeping at least a portion of the user interface associated with the first session of the application visible on the screen of the client device; receiving user input indicating a request to initiate a second session of the application; and in response to receiving the user input, causing a user interface associated with the second session of the application to be presented together with the sub-window for the first content item.

A further aspect of the disclosure provides a system comprising: a memory; and a processing device, coupled to the memory, the processing device to perform a method according to any aspect or embodiment described herein.

A further aspect of the disclosure provides a non-transitory computer-readable medium comprising instructions that, responsive to execution by a processing device, cause the processing device to perform operations according to any aspect or embodiment described herein.

### BRIEF DESCRIPTION OF THE DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
**FIG. 1** illustrates an example of system architecture for enabling sub-window interaction, in accordance with embodiments of the disclosure.
**FIG. 2A** depicts an interaction diagram of operations for generating multiple sub-windows during different sessions of an application on different client devices in accordance with embodiments of the disclosure.
**FIG. 2B** depicts an interaction diagram of operations for generating multiple sub-windows during different sessions of an application on a single client device, in accordance with embodiments of the disclosure.
**FIG. 3** depicts an interaction diagram of operations for generating multiple sub-windows relating to content items from different objects of an application view, in accordance with embodiments of the disclosure.
**FIG. 4** depicts a flow diagram of a method for presenting a sub-window in different sessions associated with an application view, in accordance with one implementation of the present disclosure.
**FIG. 5** depicts a flow diagram of a method for generating multiple sub-windows from different objects of an application view, in accordance with one implementation of the present disclosure.
**FIG. 6A-D** illustrate example graphical user interfaces (GUI) on a client device illustrating generating multiple sub-window in an application view of a collaborative database application, in accordance with an implementation of the disclosure.
**FIG. 7A-D** illustrate example graphical user interfaces (GUI) on a client device illustrating generating multiple sub-window in an application view of an email application, in accordance with an implementation of the disclosure.
**FIG. 8A-D** illustrate example graphical user interfaces (GUI) on a client device illustrating generating multiple sub-window in an application view of a file storage application, in accordance with an implementation of the disclosure.
**FIG. 9A-C** illustrate example graphical user interfaces (GUI) on a client device illustrating generating multiple sub-window in an application view of a calendar application, in accordance with an implementation of the disclosure.
**FIG. 10** depicts a block diagram of an example computing device operating in accordance with one or more aspects of the present disclosure.

### DETAILED DESCRIPTION

Productivity office tools are ubiquitous in today's business environments. Productivity office tools are applications that allow for the viewing, creating, modifying, sharing and exchanging of various office documents (e.g., spreadsheets, memos, presentations, letters, messages, database data, form generation, image editing), as well as applications for managing employee tasks and calendar events. Such applications include, for example, email applications, calendar applications, electronic document processing applications, collaborative database applications, file storage applications, and appointment books, to name a few. These tools can be an extension of features provided by a cloud computing service to a client device and displayed on a web browser, a mobile application or a desktop application executing on the client device.

An electronic document processing application can allow users to create, edit and view content items of one or more types. Content item types can include text, tables, videos, audio, images, graphs, slides, charts, software programming code, designs, lists, plans, blueprints, maps, etc. Electronic document processing applications (e.g., a word processing application, a spreadsheet application, a presentation application) can be used to manipulate (e.g., create, edit, view, print, etc.) electronic documents. An electronic document processing application can be a local application hosted by a client device to manipulate local electronic documents stored on the client device and/or electronic documents stored on one or more servers, or a web-based application accessed remotely from a client device.

An electronic document processing application can be provided, for example, by a cloud-based management platform operating in a cloud-based environment which can enable a user to store data files on one or more servers in a cloud-based environment, synchronize the data files across various devices of the user, and share the data files with one or more other users. In some instances, the cloud-based content management platform can provide a single location to manage the data files for the user. The cloud-based content management platform can enable an author of an electronic document to invite other users to join as collaborators with respect to the electronic document stored at the cloud-based content management platform. An electronic document to which users have been granted permission to access or edit concurrently can be referred to as a collaborative electronic document herein.

The cloud-based management platform may provide a file storage application that allows users to search for desired electronic documents and open and edit such documents. However, generally, a user is only able to work on one electronic document at a time, in serial manner. That is, if the user attempts to open multiple electronic documents, the windows presenting these documents usually overlap on the screen, making it difficult for the user to interact with the documents concurrently. In an example of a web-based application, a user can open multiple electronic documents in separate browser tabs but using multiple browser tabs is slow and consumes a significant amount of device memory due to the powerful yet resource-hungry nature of web-based file storage applications.

Similarly, an email application or a calendar application usually only allows a user to effectively interact with one email message or calendar event at a time. In another example, a collaborative database application may allow a user to create a customized view of database tables based on different layouts, groupings, filters, and so forth. A user may be able to select a table having multiple rows, and interact with content items associated with specific rows. However, similarly to existing file storage applications, email applications and calendar applications, a user of a collaborative database application can effectively only interact with content of one row at a time. For example, a user can select a table in a customized view, work on the content of the table's row, then select another table, work on the content of that table's row, and so forth. However, the work generally involves keeping track of and referencing multiple pieces of information, cross comparing the information, and moving and/or updating information across multiple places. With current office productive tools, working on multiple pieces of information is difficult and inefficient because a user has to continuously switch between different windows (e.g., by minimizing one window, working in another window, then minimizing the other window and maximizing the first window, etc.), or between separate browser tabs to go back and forth between different pieces of information. Switching between multiple windows or browser tabs can be a slow process that consumes significant computing resources and creates sub-optimal experience for users. Furthermore, when a user interacts with content in a window opened by an application or in a browser tab, the window with the content typically does not persist across multiple sessions of the application or the browser. As such, when the existing session ends and a new session starts, the user has to re-create the work that was previously done, which is inefficient and results in consumption of additional computing resources.

Aspects and implementations of the present disclosure address the above and other deficiencies by providing a mechanism for concurrently viewing and interacting with different content items by using sub-windows in a user interface of the application. In particular, a user can provide input indicating a request to initiate a session of an application. A session can include a sequence of communications between a start of the session (e.g., triggered by a user selection of a link or a user interface (UI) element representing the application), and an end of the session (e.g., triggered by a user closing the application, by a network condition such as lost network connection, or by user lack of interaction with the application over a predefined period of time). The application can be, for example, a file storage application, a collaborative database application, an email application, a calendar application, a task tracking application, etc. The application can maintain multiple objects that each include several records, where a record may include one or more content items. For example, in a file storage application, each object may represent a folder (e.g., via a folder name), each record of an object may represent a file (e.g., via a file name), and each content item of a record may be metadata, a content portion of a file or the like. In a collaborative database application, each object may represent a database table, each record may represents a row in a table, and each content item of a record may be data in a cell of a row or any other data included in or associated with a row. In an email application, each object may represent a folder (e.g., a sent folder, an inbox folder, etc.), each record of an object may represent an email message, and each content item of a record may be an attachment, a ticket, etc. In a calendar application, each object may represent a month of a year, each record of an object may represent a day of a month, and each content item of a record may be a calendar event.

When a session of the application starts, a user interface of the application can be displayed to the user on a screen of a user device. The user interface can present multiple content items (e.g., in association with different records and/or objects). A user may select one or more of the content items via the user interface. In response, a sub-window for the selected content item(s) can be presented while keeping at least a portion of the user interface including other content items visible on the screen of the user device. The sub-window can be a panel, within the user interface, populated with data relating to the selected content item(s). For example, a record can include three content items (e.g., two text fields and one date field), and a sub-window can show the two text fields and one date field of the selected record.

According to some aspects of the present disclosure, the sub-window can persist across multiple sessions of the application. For example, a user can initiate a first session of the application. During the first session, the user can request to open a sub-window for a content item or a record of an object of the application. The user can then initiate a new (second) session of the application. The second session can be initiated on a different client device, on the same client device but in a different browser window, or in the same browser window as the first session (e.g., the user ended the first session and initiated the second session). When the second session starts, a user interface associated with the second session of the application can be presented on the screen of the user device together with the sub-window that was opened for the content item during the first session of the application.

According to some aspects of the present disclosure, multiple sub-windows can be opened during the first session and can remain visible in the user interface associated with the second session of the application.

According to some aspects of the present disclosure, the client device can update or modify data relating to a content item of a record based on user input received via the sub-window. For example, a sub-window can receive a user input to update a content item presented by the sub-window. The user interface can then modify the content item in the sub-window based on the user input and the application can propagate the update for the content item to the corresponding record of an object (e.g., a corresponding row of a table). In some embodiments, the corresponding record is updated in response to a user input (e.g., the user selecting a save button).

Aspects of the present disclosure result in improved performance of productivity tools. In particular, the aspects of the present disclosure enable productivity tools to provide users with selected data from different objects in sub-windows in a single window or browser tab, thus allowing users to view and compare the data without having to switch between different windows or browser tabs. Further, the technology disclosed herein enables the sub-windows to persist across different sessions of an application, thus allowing users to easily resume the work progress associated with a previous session state and increase productivity. As a result, considerable computing resources are saved by not using multiple application windows and different tabs.

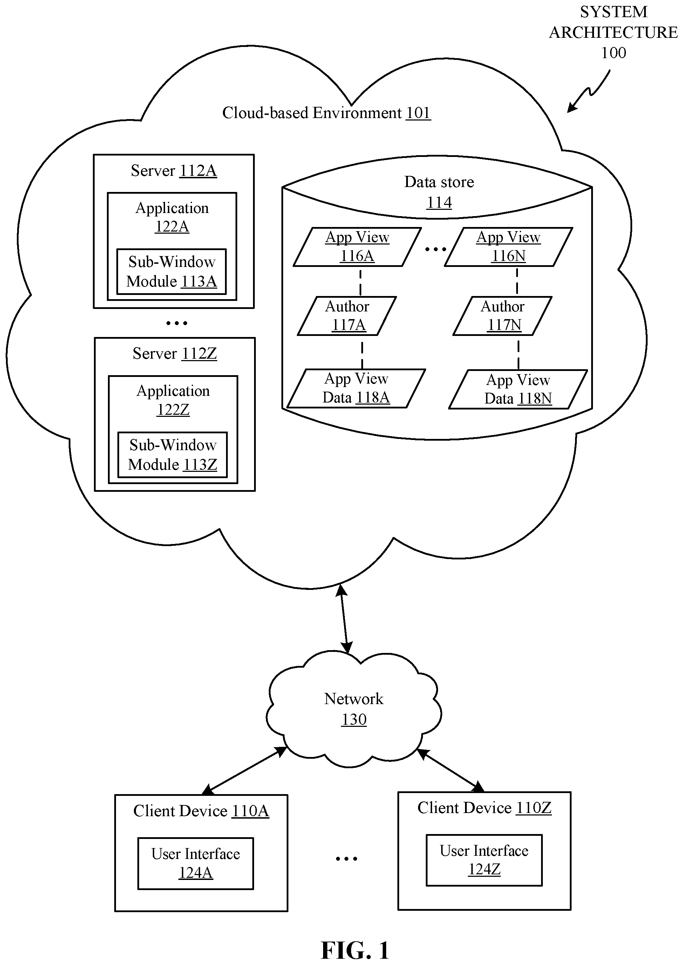

**FIG. 1** is an example of a system architecture 100 for enabling sub-window interaction, in accordance with embodiments of the disclosure. The system architecture 100 includes a cloud-based environment 101 connected to client devices 110A-110Z (generally referred to as "client device(s) 110" herein) via a network 130. Although the system architecture 100 is described in the context of a cloud-based environment 101, which can enable communication between servers 112A-112Z (generally referred to as "server(s) 112" herein) in the cloud-based environment 101 and with client devices 110A-110Z over the network 130 to store and share data, it can be understood that the embodiments described herein can also apply to systems that are locally interconnected. In some embodiments, the cloud-based environment 101 refers to a collection of physical machines that host applications (e.g., a browser application, an email application, a calendar application, a collaborative database application, a file storage application, word processing application, spreadsheet application, slide presentation application, webpage application, etc.) providing one or more services (e.g., web browsing, email, calendar functions, collaborative processing functions, file storage access, word processing, spreadsheet processing, slide generation for inclusion in a slide presentation, webpage processing, etc.) to multiple client devices 110A-110Z via the network 130. By way of reference, embodiments and examples discussed throughout this disclosure may refer to electronic documents for illustrative purposes. An electronic document can include a word processing document, a spreadsheet document, a slide presentation document, etc. The electronic document can further be a collaborative document (e.g., an electronic document including object(s), record(s), and/or content item(s) that can be shared with users). The collaborative electronic document can be a collaborative word processing document, a collaborative spreadsheet document, a collaborative slide presentation document, a collaborative webpage document, or any suitable electronic document. However, it should be understood to those skilled in the art that the systems, methods, functions, and embodiments of the present disclosure can apply to any type of programs or services offered by any type of host applications.

The network 130 can be a public network (e.g., the Internet), a private network (e.g., a local area network (LAN) or wide area network (WAN)), or a combination thereof. Network 130 can include a wireless infrastructure, which can be provided by one or more wireless communications systems, such as a wireless fidelity (Wi-Fi) hotspot connected with the network 130 or a wireless carrier system that can be implemented using various data processing equipment, communication towers, etc. Additionally or alternatively, network 130 can include a wired infrastructure (e.g., Ethernet).

The cloud-based environment 101 can include one or more servers 112A-112Z and a data store 114. In some embodiments, one or more of the servers 112A-112Z can host an application 122A-122Z (generally referred to as "application 122" herein) that provides a user interface 124A-122Z for presentation on the client devices 110A-110Z. The server 112A-112Z selected to host the application 122A-122Z can be based on certain loadbalancing techniques, service level agreements, performance indicators, or the like. The user interface 124A-122Z may be presented via a web browser (not shown). Alternatively, the client device 110A-110Z includes a local (mobile or desktop) application (not shown) that provides user interface 124A-124Z and communicates with the application 122A-122Z via network 130.

In the illustrated example, the application 122A-122Z is a collaborative database application that allows a user to create a customized view ("application view") of database tables arranged based on different layouts, groupings, filters, and so forth. An identifier of each application view 116A-116N can be stored in data store 114 in association with an author 117A-117N (e.g., a user who created the application view) and application view data 118A that specifies a set of objects (e.g., a particular combination of database tables) represented in the application view and state information, which will be discussed in more detail below. In some embodiments, author 117A-117N can be associated with multiple application views 116A-116N.

In some embodiments, the user interface 124A-124Z displays an application view 116A-116N generated based on corresponding application view data 118A-118N. In some embodiments, client devices 110A-110Z can concurrently access the application 112A-112Z to review, edit, view, and/or propose changes to content items of an application view 116A-116N in a respective user interface 124A-124Z.

A content item can be part of a record of an object and can be any data type or data file. For example, a content item can include text, numbers, dates, data tables, videos, audio, images, graphs, slides, charts, software programming code, designs, lists, plans, blueprints, maps, etc. Furthermore, a content item can include linked data (e.g., related data from two different objects), rich data (e.g., file attachments, locations, user data), rich entry data (e.g., dropdowns, tags, checkboxes, checklists, status data, etc.), automatic identification numbers, metadata (e.g., create/update time, record author, update author, etc.) In another example, each content item in a day of a calendar application can be a scheduled event (e.g., a meeting, a conference, an appointment, etc.). In yet another example, each content item in an email of an email application can be an attachment, a ticket, etc. The data relating to the object(s), record(s), and content item(s) correlating to each application view 116A-116N and author 117A-117N can be stored as corresponding application view data 118A-118N. Application view data 118A-118N can further include sub-window data, which will be explained in greater detail below.

As used herein, an application view 116A-116N refers to a collection of objects (maintained by an application and represented in a user interface of the application) in association with an author 117A-117N. For example, in a collaborative database application that can present different user-specific combinations of objects in a user interface, an author 117A-117N can be a user who specified a particular combination of objects for a customized view (created the application view 116A-116N of the application 122A-122Z). Alternatively, in a productivity application that provides a user interface representing a more uniform set of objects (e.g., a file storage application, an email application, a calendar application, etc.), an author can be a user who initiated a first session of the application. Each author 117A-117N can be identified by an author identification (ID). For example, each author can be identified by a name, a handle, an email address, etc.

In some embodiments, a user can initiate a session of application 122A-122Z on client device 110A-110Z. A session of the application 122A-122Z can correspond to an application view 116A-116N, and can include a sequence of communications between a session start event and a session end event. The session start event can be triggered by the user logging in (e.g., user login) into the application view 116A-116N of the application 122A-122Z. The session end event can be triggered by the user logging out (e.g., a user logout) from the application view 116A-116N of the application 122A-122Z. A user logout can occur automatically (e.g., based on network conditions or lack of user interaction with the application) or in response to a user request. A session state can be represented by the application view data 116A-116N.

A session can be initiated for a newly created application view or an application view selected from preexisting application views. For example, the user can create a new application view having a combination of objects (e.g., tables) or select a previously created application view from a list of preexisting application views. In particular, the user can access application 122A-122Z and select (double-click, select a start button, etc.) an application view 116A-116N from a list of preexisting application views 116A-116N. In some embodiments, the user can be prompted, by the application user interface 124A-124Z, to input a user identification and/or a password to access an application view 116A-116N.

In some embodiments, the user (e.g., author) can share the application view 116A-116N with other users (e.g., collaborators). Sharing the application view 116A-116N can refer to granting permission to the other users to access (view and/or edit) the application view 116A-116N. Sharing the application view 116A-116N can include informing other users via a message (e.g., email, text message, etc.) including a link to the application view 116A-116N. The level of permissions that each user is granted can be based on the user type of each particular user. For example, a user with an editor user type can be able to open the application view 116A-116N and make changes directly to content items of the application view 116A-116N. As such, numerous collaborators can make changes to the content items of the application view 116A-116N by joining a current session associated with the shared application view 116A-116N or initiating a new session for the shared application view 116A-116N.

In some embodiments, changes to the content items of the application view 116A-116N can be provided to or presented on client devices 110A-110Z in real-time. In some embodiments, real-time can refer to the transmission, presentation, or display of changes to the content items of the application view 116A-116N to one or more client devices 110 as the changes are being made on different client devices. For example, real-time changes (e.g., edits) to content items of an application view 116A-116N can be displayed on a screen of a client device 110A substantially concurrent with a user editing content items of an application view 116A-116N using client device 110Z (at least within the technical limitations of displaying real-time changes, e.g., the user edits to the content items of the application view 116A-116N can be displayed within milliseconds of user input and can appear to the receiving user as if in absolute real-time).

The servers 112A-112Z can be physical machines (e.g., server machines, desktop computers, etc.) that each include one or more processing devices communicatively coupled to memory devices and input/output (I/O) devices. The processing devices can include a computer, microprocessor, logic device or other device or processor that is configured with hardware, firmware, and software to carry out some of the embodiments described herein. Each of the servers 112A-112Z can host application 122A-122N, which can include a sub-window module 113A (generally referred to as "sub-window module(s) 113" herein). The sub-window module(s) 113A can be implemented as computer instructions that are executable by one or more processing devices on each of the servers 112A-112Z. The sub-window module 113A can perform the operations described with respect to the following Figures.

In some embodiments, the user interfaces 124A-124Z can be web pages rendered by a web browser and displayed on the client devices 110A-110Z in a web browser window. In another embodiment, the user interfaces 124A-124Z can be included in a stand-alone application downloaded to the client devices 110A-110Z and natively running on the client devices 110A-110Z (also referred to as a "native application" or "native client application" herein).

The client devices 110A-110Z can include one or more processing devices communicatively coupled to memory devices and I/O devices. The client devices 110A-110Z can be desktop computers, laptop computers, tablet computers, mobile phones (e.g., smartphones), or any suitable computing device. The client device 110A-110Z can include components, such as an input device and an output device. A user can be authenticated by the server 112A-112Z using a username and password (or other identification information) provided by a user via the user interface 124A-124Z, such that the same client device 110A-110Z can be used by different users at different times.

As discussed above, the client devices 110A-110Z can each include a web browser or a native client application. A user that is invited and becomes a collaborator of application view 116A-116N can request to access the application view 116A-116N via the web browser or the native client application. For example, the user can select the application view 116A-116N from the user interface 124A provided by the cloud-based environment 101 and presented by the web browser or the native client application. As such, the client device 110A associated with the user can request the application view 116A-116N from the cloud-based environment 101. The application 122A-122N can enable a user to view and/or manage the application view 116A-116N, with which they are associated, within a respective user interface 124A-124Z.

The application 122A-122Z can also enable users using different client devices 110A-110Z to simultaneously access the application view 116A-116N to comment on, edit (e.g., modify or suggest changes), or view content items of the application view 116A-116N in a respective user interface 124A-124Z.

In some embodiments, the sub-window module 113A-113Z can be a part of the application 122A-122Z hosted by server 112A-112Z. In other embodiments, the client device 110A-110Z can have a locally installed application including the sub-window module 113A-113Z to generate (e.g. dynamically generate) a sub-window model (hereafter "sub-window") to present a content item and/or content items associated with a record within the user interface 124A-124Z. In some embodiments, one or more of application view 116A-116N, author 117A-117N, and/or application view data 118A-118N can be stored locally on client devices 110A-110Z. In some embodiments, client devices 110A-110Z can execute sub-window modules 113A-113Z to generate one or more sub-windows within user interface 124A-124Z, identify respective content object(s) based on the application view data 118A-118N, for presentation in the sub-window(s), track new or modified data (associated with a content item) entered (by user input) via the user interface 124A-124Z, and cause the update of the content item to be propagated to the record associated with a respective object stored in a data store in cloud-based environment 101. The objects can be stored in data store 114 or in a separate data store (not shown).

In some embodiments, cloud-based environment 101 can execute sub-window module(s) 113A-113Z to generate one or more sub-windows in the user interface 124A-124Z, identify the correct application view data 118A-118N to be presented in the sub-window(s), provide the sub-window to one or more client devices 110A-110Z, track new or modified data (associated with a content item) entered via the user interface 124A-124Z, and causing the update for the content item to be propagated to the record associated with a respective object. In other embodiments, operations of sub-window modules 113A-113Z can be divided among servers 112A-112Z or client devices 110A-110Z.

A sub-window can be a panel within the user interface 124A-124Z. In particular, a sub-window can be a particular arrangement of information grouped together for presentation to users in a secondary window within the user interface 124A-124Z. The sub-window can be a floating sub-window (movable, by a user, around the user interface 124A-124Z) or fixed in a predetermined position within the user interface 124A-124Z. In some embodiments, the sub-window can display data from a record of an application view 116A-116N. For example, in response to a user input to select a record, the sub-window module 113A-113Z can generate a sub-window within the user interface 124A-124Z, and populate the sub-window with one or more content items associated with the record. Specifically, for example, responsive to a selected record including three content items (e.g., two text fields and one date field), the sub-window module 113A-113Z can generate a sub-window having an arrangement showing the three content items. In some embodiments, the sub-window module 113A-113Z can generate a sub-window for a user selected content item. For example, in an email application, a user input can be a selection of an attachment of an email. In response, the sub-window module 113A-113Z generates the sub-window that presents data associated with the attachment. In some embodiments, the sub-window module 113A-113Z can further close, resize, minimize, maximize, clone, and/or reposition the sub-window(s).

In some embodiments, the user interface 124A-124Z can display multiple sub-windows associated with different records and/or content objects. For example, the sub-window module 113A-113Z can present a first sub-window associated with a first record of an object and a second sub-window associated with a second record of the object.

In some embodiments, the sub-window module 113A-113Z can maintain the sub-window(s) as the user switches between different objects of the application view 116A-116N. For example, in the application view that includes two tables, the sub-window module 113A-113Z, in response to user input, can generate a sub-window presented together with a portion of the first table, then switch to presenting the second table, and automatically maintain the sub-window for presentation together with a portion of the second table. More specifically, the sub-window module 113A-113Z can provide, for presentation within the user interface 124A-124Z, the sub-window for a record or content item of a first object (of an application view 116A-116N) while displaying at least a portion of the user interface associated with the first object visible on the screen of the client device. Responsive to user input, the sub-window module 113A-113Z can switch to displaying a portion of a second object of the application view 116A-116N together with the sub-window that includes data associated with the record or content item from the first object.

In some embodiments, the sub-window module 113A-113Z can update or modify data associated with a content item of a record based on user input received via the sub-window. For example, a sub-window can receive a user input to update a content item associated with a record or the content item presented by the sub-window. The sub-window module 113A-113Z can then modify the content item in the sub-window based on the user input and propagate the update for the content item to the corresponding record. In some embodiments, the sub-window module 113A-113Z can update the corresponding record in real time. In some embodiments, the sub-window module 113A-113Z can update the corresponding record in response to a user input (e.g., the user selecting a save button).

In some embodiments, the sub-window module 113A-113Z can update or modify data presented in a sub-window based on user input received to the associated content item of a record. For example, a record in an application view can receive a user input to update a content item associated with the record. The content item can be presented in a sub-window. The sub-window module 113A-113Z can modify the content item in the application view 116A-116N based on the user input and propagate the update for the content item to the corresponding sub-window.

In some embodiments, as a user edits an application view 116A-116N at the client device 110, a change request can be sent to the server(s) 112. The change request can include a command that can describe the type of change, the location of the change (e.g., coordinate location), and the content of the change, if applicable. In some embodiments, the server 112A can receive a change request from client device 110A. The server 112A can apply the change described by the command in the application view data 118A-N.

In some embodiments, the sub-window module 113A-113Z can modify the application view data 118A-118N to include information identifying a sub-window presented in the user interface 124A-124Z. Accordingly, the sub-window can be presented on the user interface 124A-124Z during any subsequent sessions of the application 122A-122Z. For example, client device 110A can initiate a session of application 122A that corresponds to an application view 116A. During the session, the sub-window module 113A-113B can present a sub-window corresponding to a record of an object from the application view 116A. Responsive to presenting the application view 116A, the sub-window module 113A-113B can modify the application view data 118A to include information identifying the sub-window presented in the user interface 124A. Client device 110Z can then initiate a session of application 122A that corresponds to the application view 116Z. Accordingly, user interface 124A can present the objects of application view 116Z together with the sub-window.

In some embodiments, responsive to a user interface opening (generating) a sub-window, closing the sub-window, or manipulating the sub-window (e.g., resizing, minimizing, maximizing, cloning, and/or repositioning the sub-window), the sub-window module 113B-113Z can send, to the server 112A-112Z and/or data store 114, updated application view data. The updated application view data can include sub-window data, such as, the sub-window ID, size of the sub-window, position of the sub-window, state of the sub-window (e.g., open, minimized, etc.), content identifying data relating to the content item or record presented by the sub-window (e.g., a content item ID, a record ID, an object ID, an application view ID, an author ID, an application ID, a session ID), and metadata, (e.g., a time stamp). The update application view data can be stored as application view data 118AN. As discussed herein, the application view data 118A-N is maintained for multiple sessions of the application to allow the sub-windows to persist across the multiple sessions. In some implementations, the application view data 118A-N may expire (and/or be deleted from data store 114) after a certain time period from its creation or in response to an author request (e.g., a request to reset a respective application view to a default state).

Further to the descriptions above, a user may be provided with controls allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

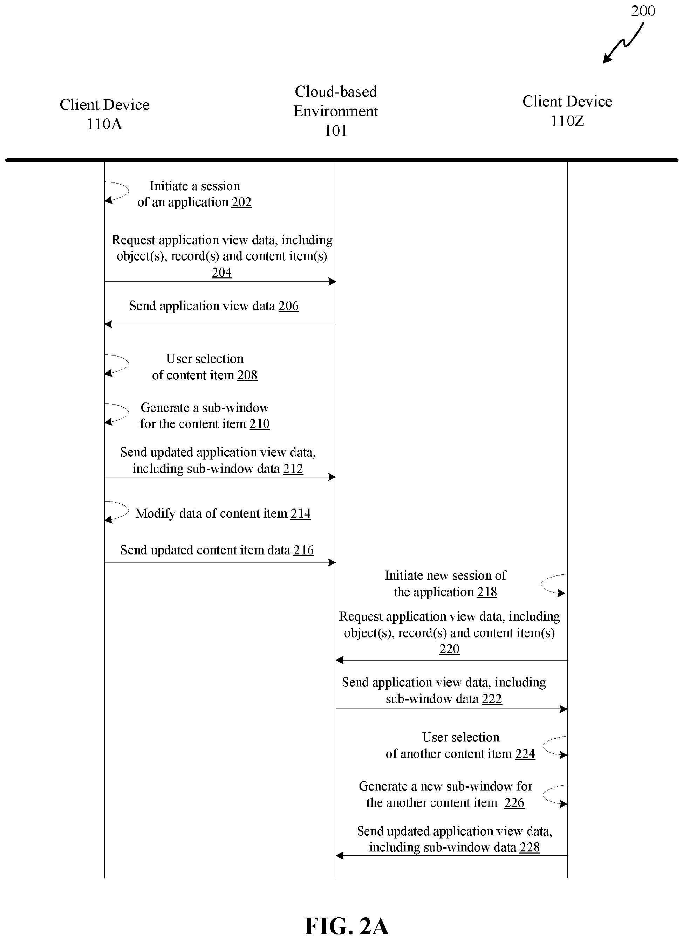

**FIG. 2A** is a diagram of operations for generating multiple sub-windows during different sessions of an application on different client devices, in accordance with embodiments of the disclosure. System 200 can include similar components as system architecture 100 of **FIG. 1****.** It may be noted that components of **FIG. 1** can be used to help describe **FIG. 2A****.** For purposes of illustration, rather than limitation, operations with respect to system 200 are described as performed by client device 110A, client device 110Z, or cloud-based environment 101 may be performed by any component thereof, unless otherwise described. The operations described with respect to **FIG. 2A** are shown to be performed sequentially for the sake of illustration, rather than limitation. It may be noted that the operations may be performed in any order and that any of the operations may be performed concurrently with one or more other operations. In some implementations, the same, different, fewer, or greater number of operations may be performed in any order.

At operation 202, client device 110A initiates a session of an application. The application can include a browser application, an email application, a calendar application, a collaborative database application, a file storage application, word processing application, spreadsheet application, slide presentation application, and/or a webpage application providing one or more services (e.g., web browsing, email, calendar functions, collaborative processing functions, file storage access, word processing, spreadsheet processing, slide generation for inclusion in a slide presentation, webpage processing, etc.). A session of the application can correspond to an application view, and can include a sequence of communications between a session start event and a session end event. The session can be initiated for a new application view or a selected preexisting application view. For example, the user can create a new application view of, for example, a combination of objects (e.g., tables), or select a previously created application view from a list of preexisting application views.

At operation 204, client device 110A requests, from the cloud-based environment 101, application view data corresponding to the application view. The application view data can include one or more objects, one or more records, and/or one or more content items. In some embodiments, the application view data can include sub-window data corresponding to one or more sub-windows generated (e.g., opened) in a previous session of the application corresponding to the application view.

At operation 206, cloud-based environment 101 sends the application view data to client device 110A. Client device 110A can then provide, for presentation on its screen, a user interface associated with the session of the application that corresponds to the application view defined by the application view data.

At operation 208, client device 110A receives a user selection of a content item to present in a sub-window. The content item can be selected from a record of an object associated with the application view. In some embodiments, client device 110A can receive a user selection of a record of the object to present in a sub-window.

At operation 210, client device 110A generates a sub-window for the content item. The sub-window can be a panel within the user interface of client device 110A. The sub-window can be populated with the content item, or with one or more content items associated with the selected record.

At operation 212, client device 110A sends updated application view data to cloud-based environment 101. The updated application view data can include sub-window data, such as, the sub-window ID, size of the sub-window, state of the sub-window (e.g., open, minimized, etc.), position of the sub-window, content identifying data relating to the content item or record presented by the sub-window (e.g., a content item ID, a record ID, an object ID, an application view ID, an author ID, an application ID, a session ID), and/or metadata (e.g., a time stamp). In some embodiments, client device 110A sends the updated application view data to cloud-based environment periodically. In some embodiments, client device 110A sends the updated application view data in response to the generation of the sub-window. In some embodiments, client device 110A sends the updated application view data to the cloud-based environment 101 in response to the sub-window being closed, resized, minimized, maximized, cloned, and/or repositioned.

At operation 214, client device 110A receives user input to modify (e.g., edit) the data of the content item. For example, the user interface of client device 110A can receive user input to modify the data of the content item via the record displayed in the application view, or via the sub-window.

At operation 216, client device 110A sends the updated content item data to cloud-based environment 101. In some embodiments, the client device 110A can update the corresponding content item in real time. In some embodiments, the client device 110A can update the corresponding record in response to the user selecting a save button.

At operation 218, client device 110Z initiates a new session of the application. To initiate the session, a user can, via the user interface of the client device 110Z, select the application view from a list of application views. In some embodiments, the current session and the new session can run on client device 110A and 110Z, respectively, simultaneously.

At operation 220, client device 110Z requests, from the cloud-based environment 101, the application view data corresponding to the selected application view. The application view data can include the one or more objects, one or more records, one or more content items of the selected application view, together with sub-window data of the selected application view. The sub-window data can include data associated with the sub-window generated at operation 210. For example, the data can include which content item or record the sub-window is associated with, the location of the sub-window within the user interface, the state of the sub-window (e.g., maximized, minimized, location, etc.).

At operation 222, cloud-based environment 101 sends the application view data to client device 110Z. Client device 110Z can then provide, for presentation on its screen, a user interface associated with the new session of the application that corresponds to the application view defined by the application view data. In particular, client device 110Z can present, within its user interface, the sub-window for the content item while keeping at least a portion of the user interface associated with the new session of the application visible on its screen.

At operation 224, client device 110Z receives a user selection of another (a different) content item to present in a sub-window. For example, a new content item can be selected from a record of an object associated with the application view. In some embodiments, client device 110Z can receive a user selection of a different (new) record of the object to present in a sub-window.

At operation 226, client device 110Z generates a new sub-window for the new content item (or the new record). The new sub-window can be populated with data from the new content item (or with data related to one or more content items associated with the new selected record).

At operation 228, client device 110Z sends updated application view data to cloud-based environment 101. The updated application view data can include sub-window data associated with the new sub-window and the original sub-window.

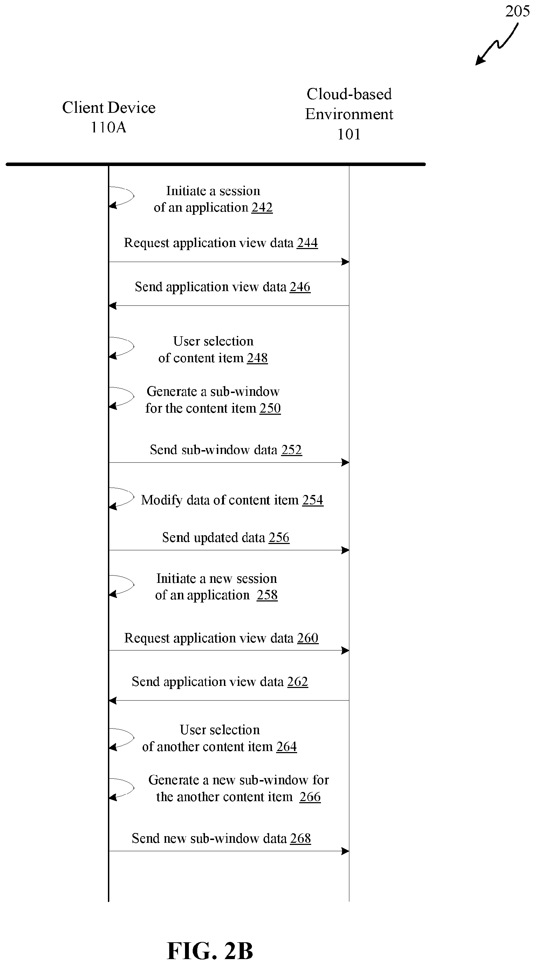

**FIG. 2B** is a diagram of operations for generating multiple sub-windows during different sessions of an application on a single client device, in accordance with embodiments of the disclosure. System 205 can include similar components as system architecture 100 of **FIG. 1****.** It may be noted that components of **FIG. 1** can be used to help describe **FIG. 2B****.** For purposes of illustration, rather than limitation, operations with respect to system 205 are described as performed by client device 110A or cloud-based environment 101 may be performed by any component thereof, unless otherwise described. The operations described with respect to **FIG. 2B** are shown to be performed sequentially for the sake of illustration, rather than limitation. It may be noted that the operations may be performed in any order and that any of the operations may be performed concurrently with one or more other operations. In some implementations, the same, different, fewer, or greater number of operations may be performed in any order.

At operation 242, client device 110A initiates a session of an application. The application can include a browser application, an email application, a calendar application, a collaborative database application, a file storage application, word processing application, spreadsheet application, slide presentation application, and/or a webpage application providing one or more services (e.g., web browsing, email, calendar functions, collaborative processing functions, file storage access, word processing, spreadsheet processing, slide generation for inclusion in a slide presentation, webpage processing, etc.). A session of the application can correspond to an application view, and can include a sequence of communications between a session start event and a session end event. To initiate the session, the user can create a new application view or select a preexisting application view. For example, the user can create a new application view of, for example, a combination of objects (e.g., tables), or select a previously created application view from a list of preexisting application views.

At operation 244, client device 110A requests, from the cloud-based environment 101, application view data corresponding to the application view. The application view data can include one or more objects, one or more records, and/or one or more content items. In some embodiments, the application view data can include sub-window data corresponding to one or more sub-windows generated (e.g., opened) in a previous session of the application corresponding to the application view.

At operation 246, cloud-based environment 101 sends the application view data to client device 110A. Client device 110A can then provide, for presentation on its screen, a user interface associated with the session of the application that corresponds to the application view defined by the application view data.

At operation 248, client device 110A receives a user selection of a content item to present in a sub-window. The content item can be selected from a record of an object associated with the application view. In some embodiments, client device 110A can receive a user selection of a record of the object to present in a sub-window.

At operation 250, client device 110A generates a sub-window for the content item. The sub-window can be a panel within the user interface of client device 110A. The sub-window can be populated with the content item, or with one or more content items associated with the selected record.

At operation 252, client device 110A sends updated application view data to cloud-based environment 101. The updated application view data can include sub-window data, such as, the sub-window ID, size of the sub-window, state of the sub-window (e.g., open, minimized, etc.), position of the sub-window, content identifying data relating to the content item or record presented by the sub-window (e.g., a content item ID, a record ID, an object ID, an application view ID, an author ID, an application ID, a session ID), and/or metadata (e.g., a time stamp). In some embodiments, client device 110A sends the updated application view data to cloud-based environment periodically. In some embodiments, client device 110A sends the updated application view data in response to the generation of the sub-window. In some embodiments, client device 110A sends the updated application view data to the cloud-based environment 101 in response to the sub-window being closed, resized, minimized, maximized, cloned, and/or repositioned.

At operation 254, client device 110A receives user input to modify (e.g., edit) the data of the content item. For example, the user interface of client device 110A can receive user input to modify the data of the content item via the record displayed in the object of the application view, or via the sub-window.

At operation 256, client device 110A sends the updated content item data to cloud-based environment 101. In some embodiments, the client device 110A can update the corresponding content item in real time. In some embodiments, the client device 110A can update the corresponding record in response to the user selecting a save button.

At operation 258, client device 110A initiates a new session of the application. For example, client device 110A can end the current session and initiate the new session. In another example, client device 110A can initiate the new session in a different application window (e.g., a different browser window). To initiate the session, a user can, via the user interface of the client device 110A, select the application view from a list of application views. In some embodiments, the current session and the new session can run on client device 110A simultaneously.

At operation 260, client device 110A requests, from the cloud-based environment 101, the application view data corresponding to the selected application view. The application view data can include the one or more objects, one or more records, one or more content items of the selected application view, along with sub-window data of the selected application view. The sub-window data can include data associated with the sub-window generated at operation 250. For example, the data can include which content item or record the sub-window is associated with, the location of the sub-window within the user interface, the state of the sub-window (e.g., maximized, minimized, location, etc.).

At operation 262, cloud-based environment 101 sends the application view data to client device 110A. Client device 110A can then provide, for presentation on its screen, a user interface associated with the new session of the application that corresponds to the application view defined by the application view data. In particular, client device 110A can present, within its user interface, the sub-window for the content item while keeping at least a portion of the user interface associated with the new session of the application visible on its screen.

At operation 264, client device 110A receives a user selection of another (a different) content item to present in a sub-window. For example, a new content item can be selected from a record of an object associated with the application view. In some embodiments, client device 110A can receive a user selection of a different (new) record of the object to present in a sub-window.

At operation 266, client device 110A generates a new sub-window for the new content item (or the new record). The new sub-window can be populated with data from the new content item (or with data related to one or more content items associated with the new selected record).

At operation 268, client device 110A sends updated application view data to cloud-based environment 101. The updated application view data can include sub-window data associated with the new sub-window and the original sub-window.

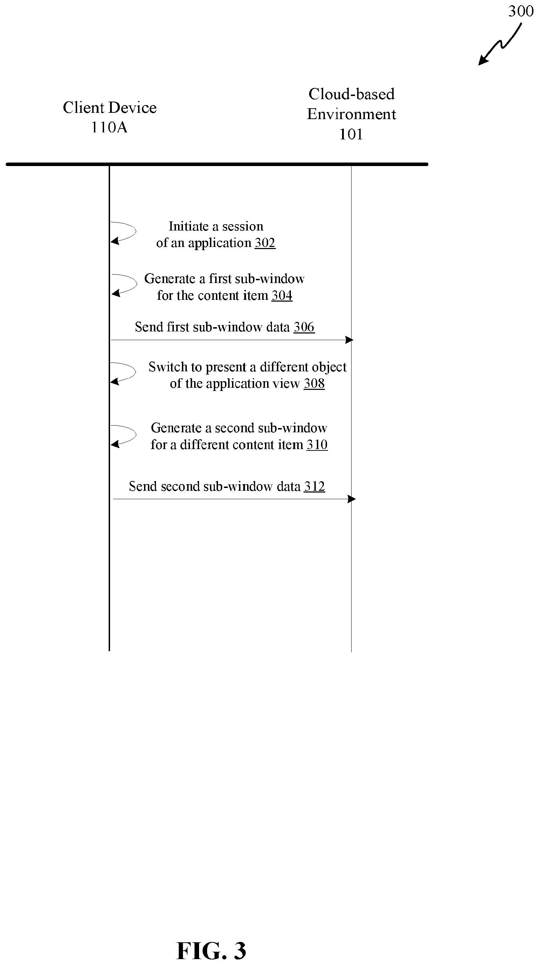

**FIG. 3** is a diagram of operations for generating multiple sub-windows relating to content items from different objects of an application view, in accordance with embodiments of the disclosure. System 300 can include similar components as system architecture 100 of **FIG. 1****.** It may be noted that components of **FIG. 1** can be used to help describe **FIG. 3****.** For purposes of illustration, rather than limitation, operations with respect to system 300 are described as performed by client device 110A or cloud-based environment 101 may be performed by any component thereof, unless otherwise described. The operations described with respect to **FIG. 3** are shown to be performed sequentially for the sake of illustration, rather than limitation. It may be noted that the operations may be performed in any order and that any of the operations may be performed concurrently with one or more other operations. In some implementations, the same, different, fewer, or greater number of operations may be performed in any order.

At operation 302, client device 110A initiates a session of an application. The application can include a browser application, an email application, a calendar application, a collaborative database application, a file storage application, word processing application, spreadsheet application, slide presentation application, and/or a webpage application providing one or more services (e.g., web browsing, email, calendar functions, collaborative processing functions, file storage access, word processing, spreadsheet processing, slide generation for inclusion in a slide presentation, webpage processing, etc.). A session of the application can correspond to an application view, and can include a sequence of communications between a session start event and a session end event. To initiate the session, the user can create a new application view or select a previously created application view from a list of preexisting application views. In some embodiments, client device 110A can request, from the cloud-based environment 101, application view data corresponding to the application view. The application view data can include multiple objects, one or more records, and/or one or more content items. In some embodiments, the application view data can include sub-window data corresponding to one or more sub-windows generated (e.g., opened) in a previous session of the application corresponding to the application view. For illustrative purposes, the application view includes a first object and a second object.

At operation 304, client device 110A receives a user selection of a content item to present in a sub-window. The content item can be selected from a record of the first object associated with the application view. In some embodiments, client device 110A can receive a user selection of a record of the object to present in a sub-window. Client device 110A can then generate a sub-window for the content item. The sub-window can be a panel within the user interface of client device 110A. The sub-window can be populated with the content item of the first object, or with one or more selected content items associated with the selected record of the first object.

At operation 306, client device 110A sends updated application view data to cloud-based environment 101, including the first sub-window data that is associated with the first sub-window including, for example, the sub-window ID, size of the sub-window, state of the sub-window (e.g., open, minimized, etc.), position of the sub-window, content identifying data relating to the content item or record presented by the sub-window (e.g., a content item ID, a record ID, an object ID, an application view ID, an author ID, an application ID, a session ID), and/or metadata (e.g., a time stamp).

At operation 308, client device 110A receives user input to switch from presenting the first object of the application view to presenting the second object of the application view. The second object of the application view can include a different set of records and content items. In some embodiments, one or more records and/or content items of the second object can be linked to the first object. The user interface can display the records associated with the second object together with the first sub-window relating to the first object.

At operation 310, client device 110A receives a user selection of a content item to present in a second sub-window. The content item can be selected from a record of the second object associated with the application view. In some embodiments, client device 110A can receive a user selection of a record of the second object to present in the second sub-window. Client device 110A can then generate the second sub-window for the content item. The second sub-window can be another panel within the user interface of client device 110A. The second sub-window can be populated with the content item of the second object, or with one or more selected content items associated with a selected record of the second object.

At operation 312, client device 110A sends updated application view data to cloud-based environment 101, including the second sub-window data. The second sub-window data can be associated with the second sub-window, such as the sub-window ID, size of the sub-window, position of the sub-window, content identifying data relating to the content item or record presented by the sub-window (e.g., a content item ID, a record ID, an object ID, an application view ID, an author ID, an application ID, a session ID), and metadata, (e.g., a time stamp).

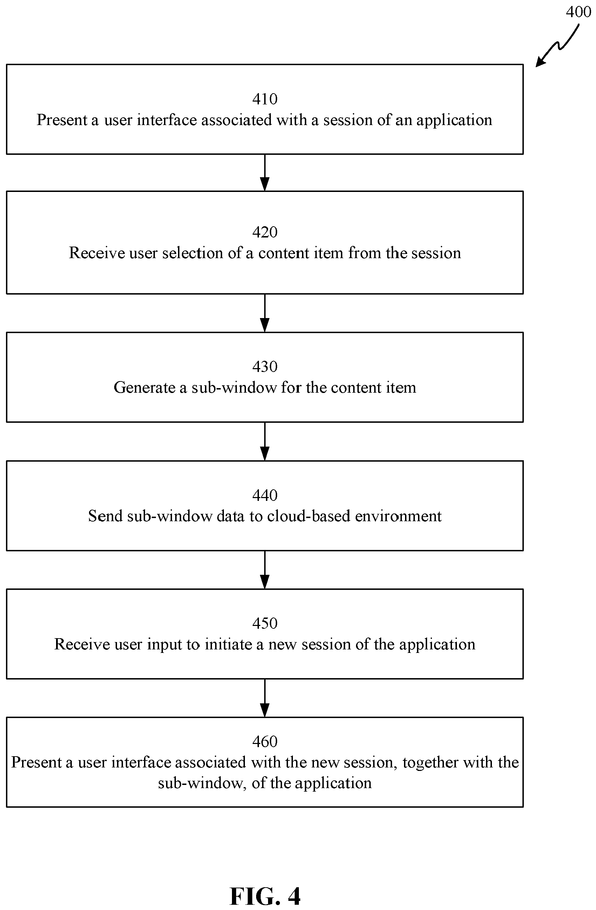

**FIG. 4** depicts a flow diagram of a method 400 showing a process for presenting a sub-window in different sessions associated with an application view, in accordance with some aspects of the disclosure. The method 400 is performed by processing logic that can comprise hardware (circuitry, dedicated logic, etc.), software (such as is run on a general purpose computer system or a dedicated machine), or a combination of both. In one implementation, the method is performed by the client device 110 and or the cloud-based environment 101 of **FIG. 1**, while in some other implementations one or more blocks of **FIG. 4** can be performed by another machine. In one implementation, a processing device of a client device (e.g., client device 110 in **FIG. 1**) performs method 400.

At block 410, the processing device presents a user interface associated with a session of an application. The session of the application can correspond to an application view that include one or more objects, one or more records, and/or one or more content items.

At block 420, the processing device receives user selection of a content item from the session. In particular, the processing device can receive a user selection of a content item to be presented in a sub-window.

At block 430, the processing device generates a sub-window for the content item. For example, the processing device can provide, for presentation within the user interface associated with the session of the application, a sub-window for the content item while keeping at least a portion of the user interface associated with the session of the application visible on the screen of the client device.

At block 440, the processing device sends sub-window data to the cloud-based environment. The sub-window data can include the sub-window ID, size of the sub-window, position of the sub-window, content identifying data relating to the content item or record presented by the sub-window (e.g., a content item ID, a record ID, an object ID, an application view ID, an author ID, an application ID, a session ID), and metadata, (e.g., a time stamp).

At block 450, the processing device receives user input to initiate a new session of the application. For example, the processing device can receive user input selecting the application view from a list of application views. In some embodiments, the processing device can retrieve application view data, from the cloud-based environment, associated with the application view. The application view data can include sub-window data.

At block 460, the processing device presents a user interface associated with the new session, together with the sub-window, of the application. For example, the processing device can cause a user interface associated with the new session of the application to be presented together with the sub-window for the content item.

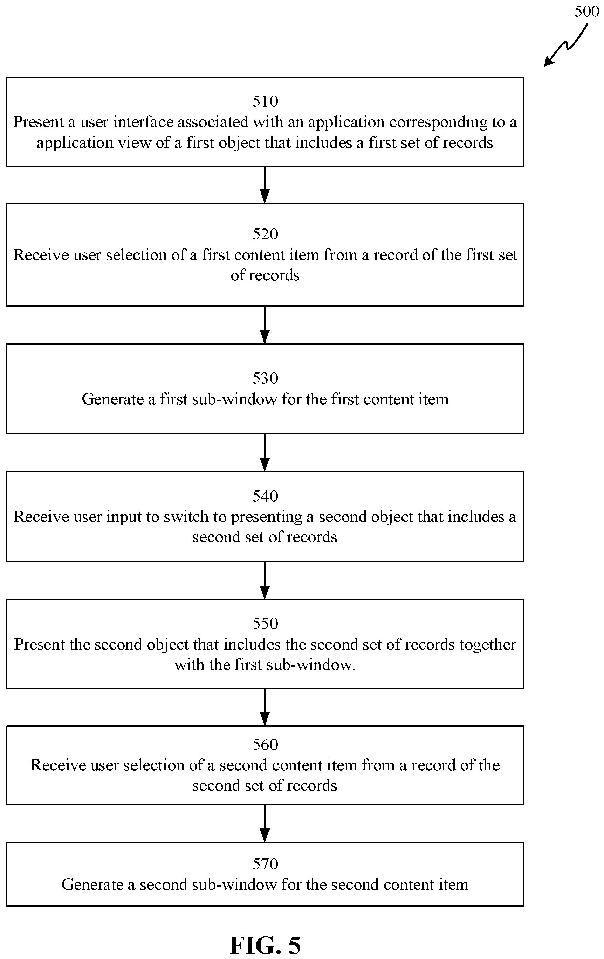

**FIG. 5** depicts a flow diagram of a method 500 showing a process for generating multiple sub-windows from different objects of an application view, in accordance with some aspects of the disclosure. The method 500 is performed by processing logic that can comprise hardware (circuitry, dedicated logic, etc.), software (such as is run on a general purpose computer system or a dedicated machine), or a combination of both. In one implementation, the method is performed by the client device 110 and or the cloud-based environment 101 of **FIG. 1**, while in some other implementations one or more blocks of **FIG. 4** can be performed by another machine. In one implementation, a processing device of a client device (e.g., client device 110 in **FIG. 1**) performs method 500.

At block 510, the processing device presents a user interface associated with an application corresponding to an application view of a first object that includes a first set of records.

At block 520, the processing device receives user selection of a content item from a record of the first set of records. In particular, the processing device can receive a user selection of a first content item to be presented in a first sub-window.

At block 530, the processing device generates a first sub-window for the content item. For example, the processing device can provide, for presentation within the user interface associated with the session of the application, a first sub-window for the first content item while keeping at least a portion of the user interface associated with the session of the application visible on the screen of the client device.

At block 540, the processing device receives user input to switch to presenting a second object that includes a second set of records, each record in the second set of records including one or more content items.

At block 550, the processing device presents the second object that includes the second set of records and the first sub-window. For example, the processing device can providing, for presentation within the user interface associated with the session of the application, the user interface of the second object together with the sub-window for the first content item.

At block 560, the processing device receives user selection of a second content item from a record of the second set of records. In particular, the processing device can receive a user selection of a second content item to be presented in a second sub-window.

At block 570, the processing device generates a second sub-window for the second content item. Accordingly, a portion of the second object is visible on the user interface together with the first sub-window and the second sub-window.

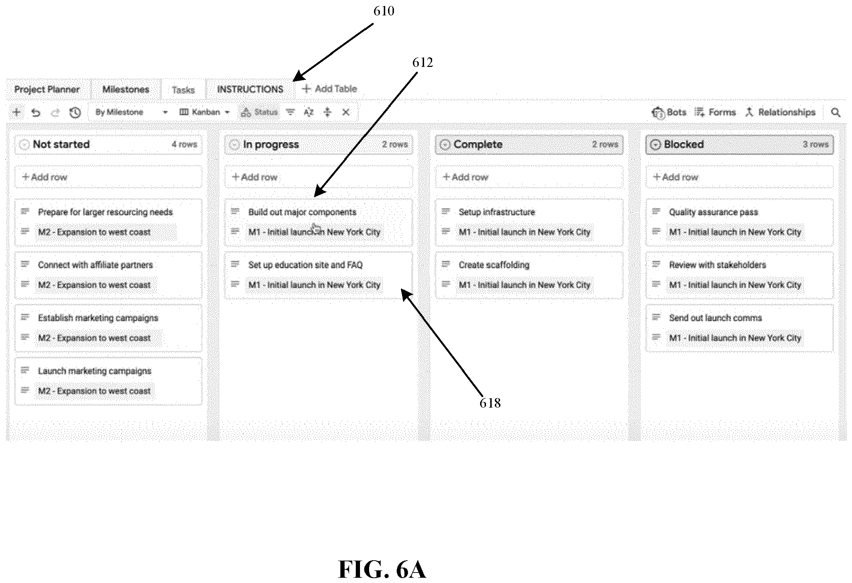

**FIGS. 6A-6D** are illustrations of example graphical user interfaces (GUI) on a client device illustrating generating multiple sub-window in an application view of a collaborative database application, in accordance with some aspects of the disclosure. Specifically, FIG. 6A shows an example application view of a collaborative database application. The application view includes four objects 610 (representing four tables) selectable by tabs (project planner, milestones, tasks, and instructions). The tasks object is displayed, and includes multiple records (e.g., record 612 and record 618). Each record includes multiple content items. Each record can be selected by user input to create a sub-window for the record.

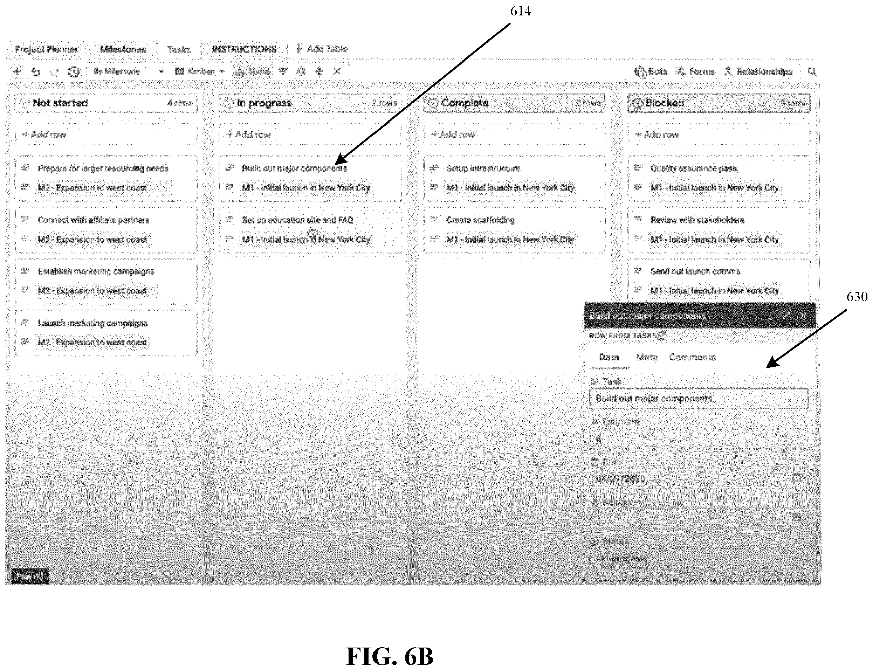

**FIG. 6B** shows example sub-window 630 generated for record 612 (Build out major components). Sub-window 630 includes data and/or content items associated with record 612, such as a tasks text field, an estimate text field, a due date field, an assignee field, and a status field. Sub-window 630 further includes a metadata tab and a comments tab, both of which include additional content items for record 612.

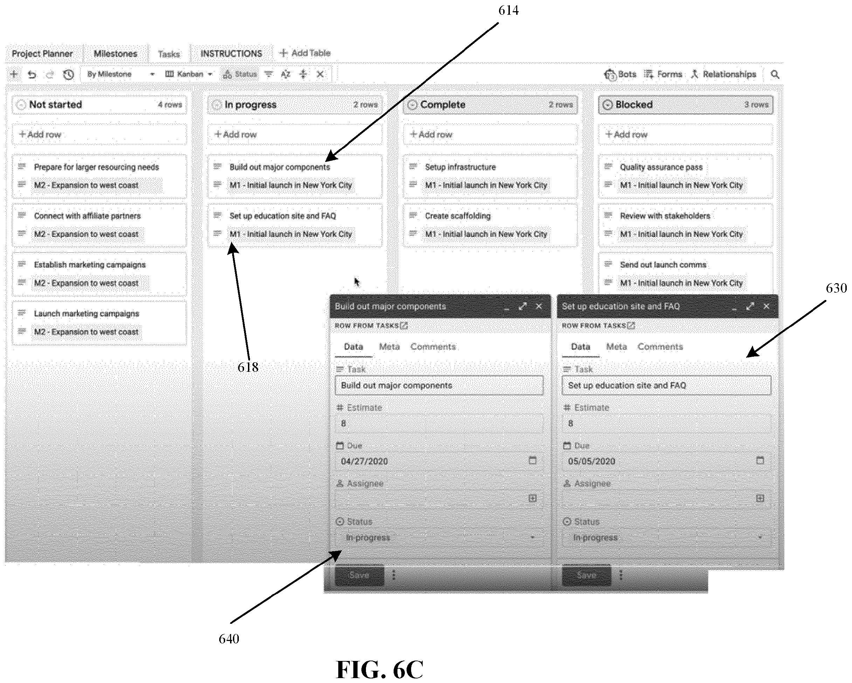

**FIG. 6C** shows example sub-window 640 generated for record 618 (Set up education site and FAQ). Sub-window 640 includes data and/or content items associated with record 618, such as a tasks text field, an estimate text field, a due date field, an assignee field, and a status field. Sub-window 640 further includes a metadata tab and a comments tab, both of which include additional content items for record 618.

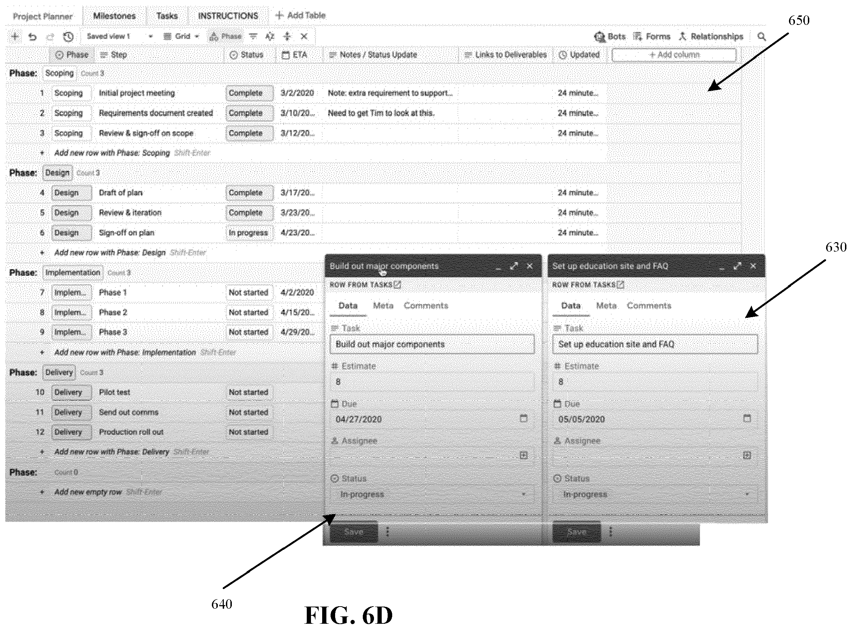

**FIG. 6D** shows an example user interface for the project planner object 650 of the application view. As shown, sub-windows 630 and 640 persist from the task object to the project planner object and remain presented during the presentation of the project planner object 650, along with other records/content items of the application view.

In some embodiments, a user may be able to switch (e.g., via a GUI element such as a link, a button, etc.) to another ("second") application view including a different set of objects (e.g., more or less tables or a different combination of tables). When a session corresponding to the second application view is initiated, the GUI presented to the user will include one or more sub-windows that were opened for the user during a previous session corresponding to the second application view. As such, users are able to switch between different application views and immediately see all the sub-windows they had opened before. This allows users to easily resume their work process with all their previous state and context.

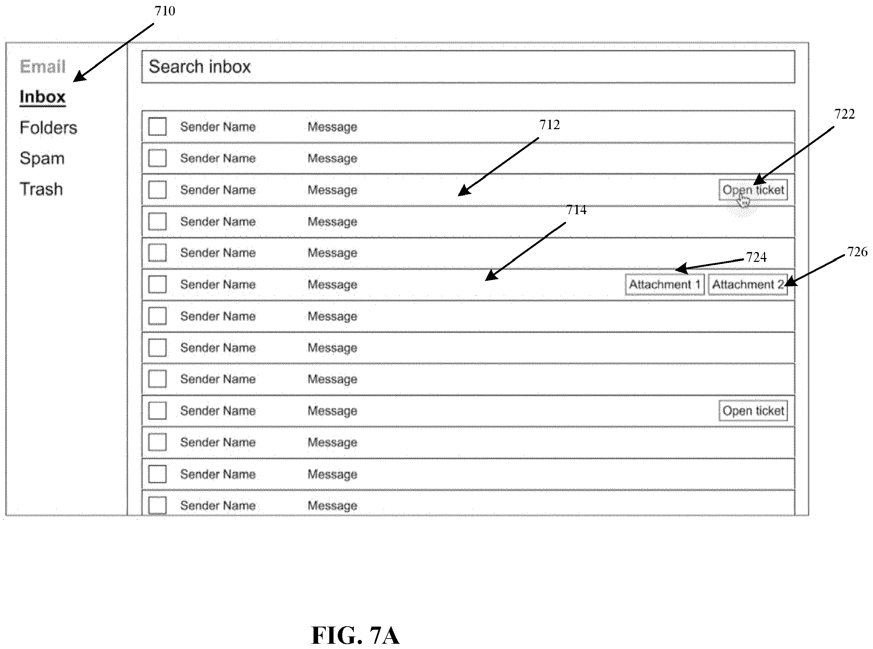

**FIGS. 7A-7D** are illustrations of example graphical user interfaces (GUI) on a client device illustrating generating multiple sub-window in a GUI of an email application, in accordance with some aspects of the disclosure. Specifically, **FIG. 7A** shows a GUI of an email application. The GUI includes three selectable objects 710 (inbox folder, spam folder, trash folder). The inbox folder object is displayed, and includes multiple records (emails), such as email 712 and email 714. Some records include one or more content items (e.g., email 712 include content item 722 (open ticket), and email 714 includes content item 724 (attachment 1) and content item 726 (attachment 2)). Each content item can be selected by user input to create a sub-window for the content item.

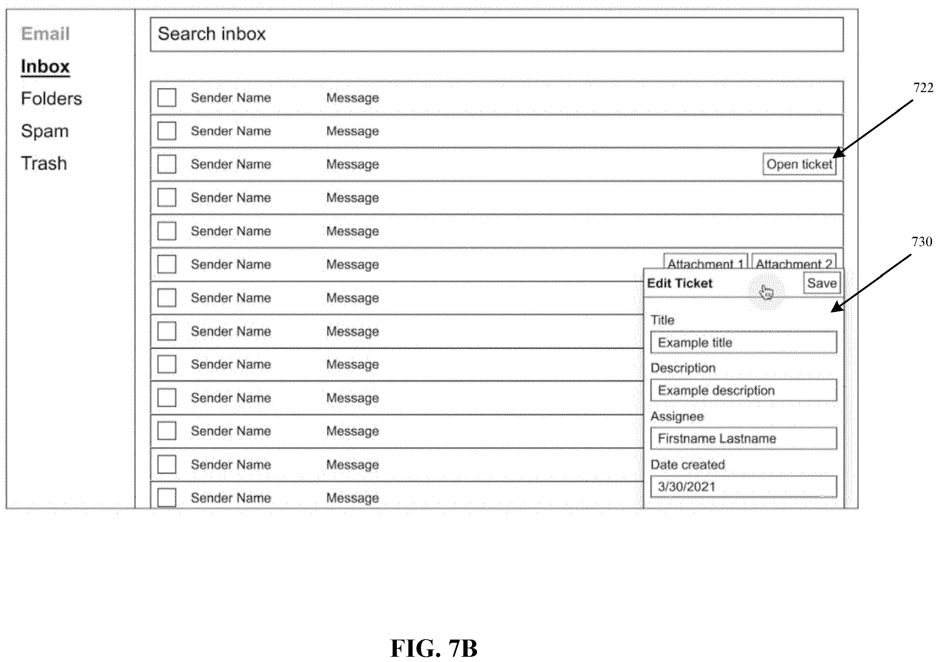

**FIG. 7B** shows example sub-window 730 generated for content item 722. Sub-window 730 includes metadata associated with content item 722, such as a title text field, a description text field, an assignee text field, and a data created field.

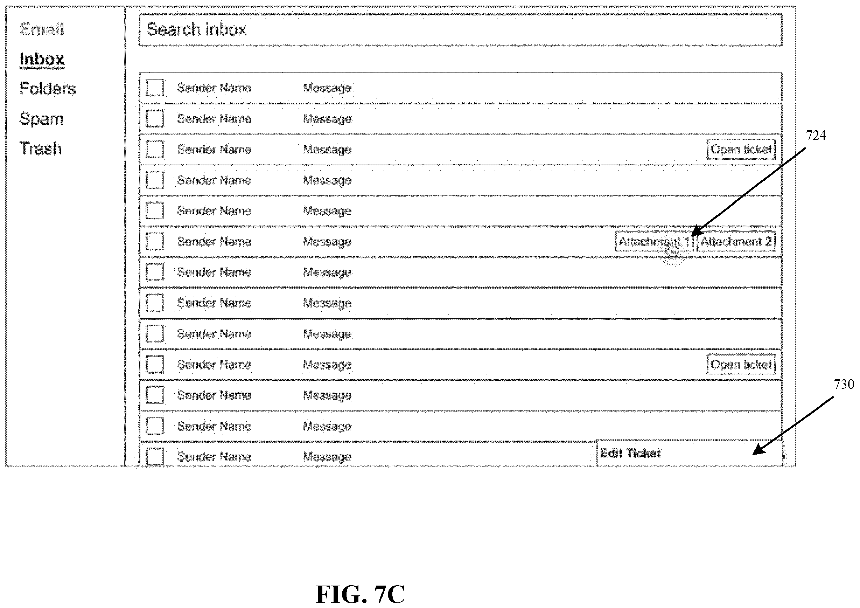

**FIG. 7C** shows example sub-window 730 minimized and user input selecting content item 724 to generate a sub-window for content item 724.

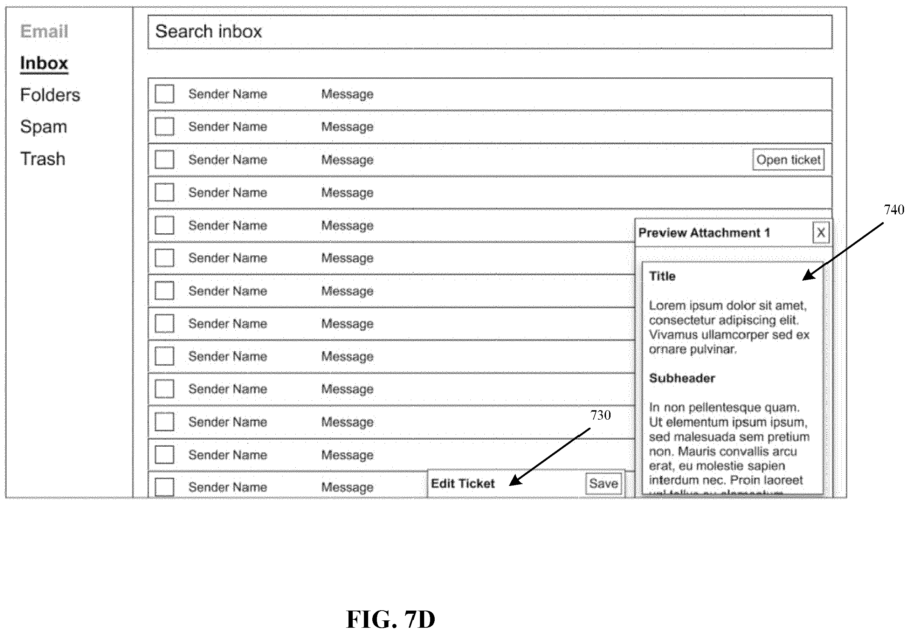

**FIG. 7D** shows example sub-window 740 generated for content item 724. Sub-window 740 includes a display field presenting the contents of content item 724 (e.g., the contents of attachment 1).

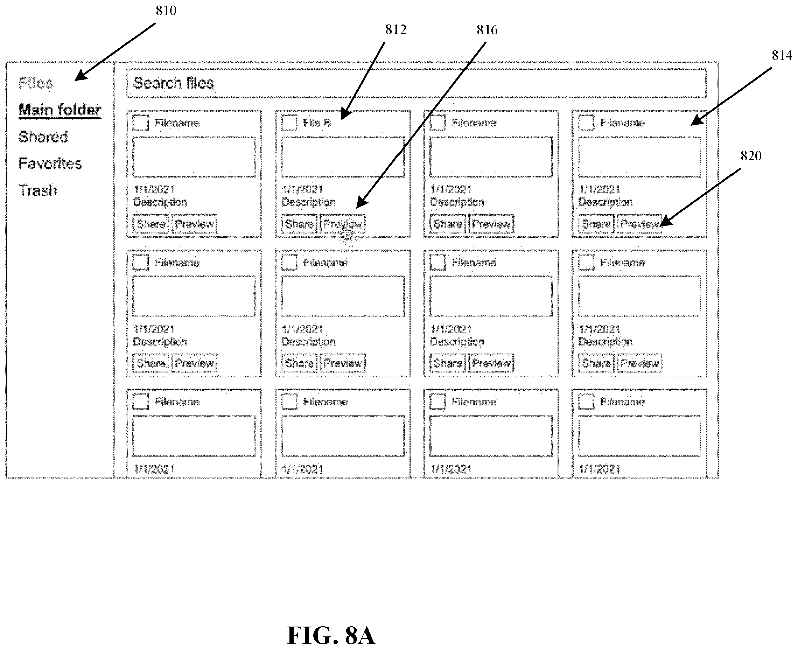

**FIGS. 8A-8D** are illustrations of example graphical user interfaces (GUI) on a client device illustrating generating multiple sub-windows in a GUI of a file storage application, in accordance with some aspects of the disclosure. Specifically, **FIG. 8A** shows an example GUI of a file storage application. The GUI includes four selectable objects 810 (mail folder, shared folder, favorites folder, and trash folder). The main folder object is displayed, and includes multiple records (files), such as record 812 (File B) and record 814 (File D). Each record can include a preview button (e.g., button 816 and button 820) to generate a sub-window for the respective record.

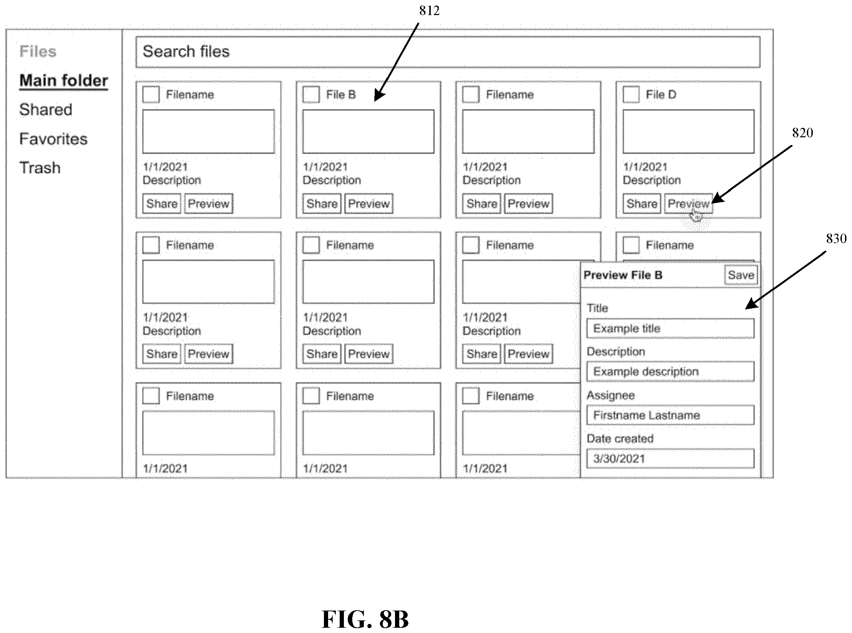

**FIG. 8B** shows example sub-window 830 generated for record 812 by selecting button 814. Sub-window 830 includes metadata associated with record 812, such as a title text field, a description text field, an assignee text field, and a data created field.

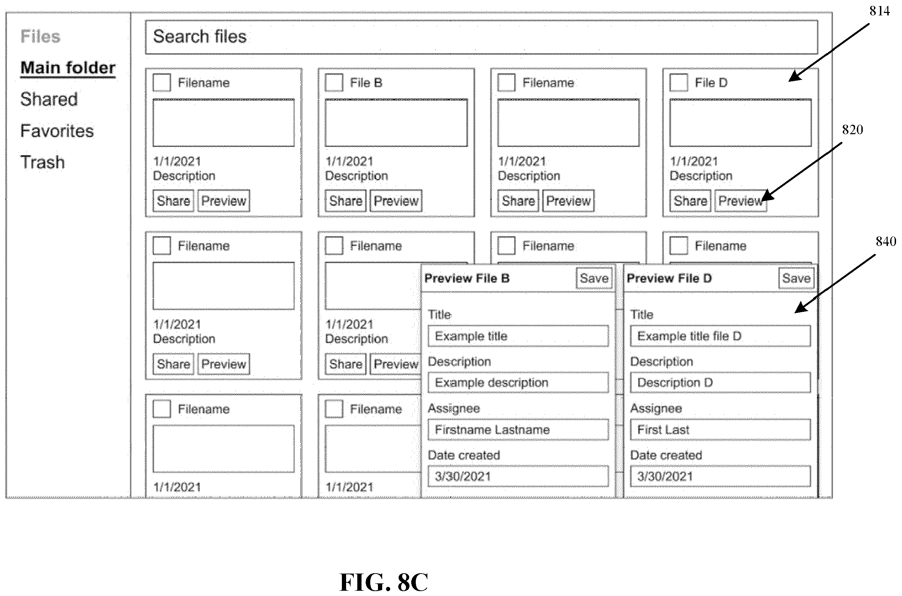

**FIG. 8C** shows example sub-window 840 generated for record 814 using button 820. Sub-window 840 includes metadata associated with record 814, such as a title text field, a description text field, an assignee text field, and a data created field.

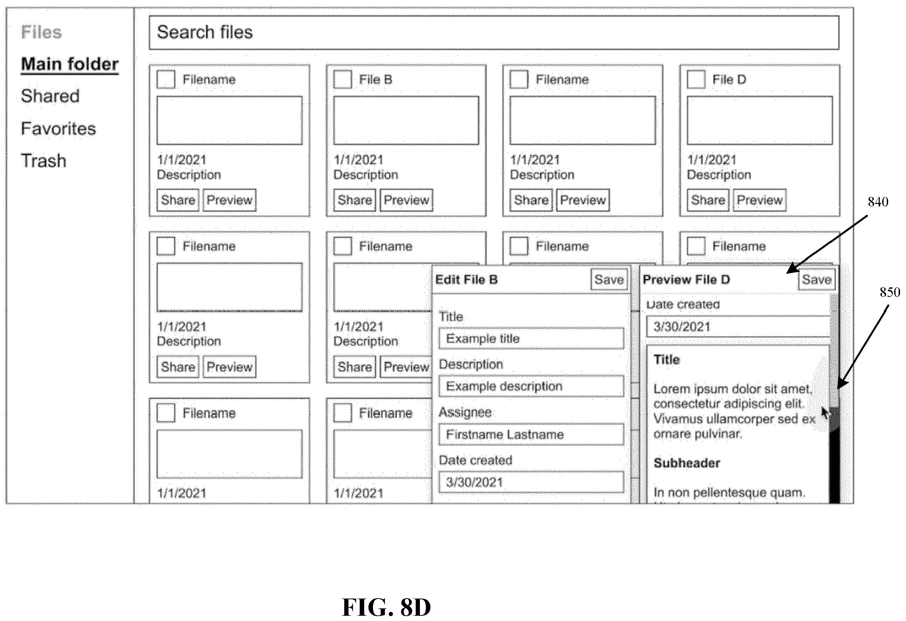

**FIG. 8D** shows example sub-window 840 with scroll bar 850. Scroll bar 850 enables a user to scroll in the sub-window to view additional data associated with record 814, such as a display field presenting the contents of record 814 (e.g., the contents of File D).

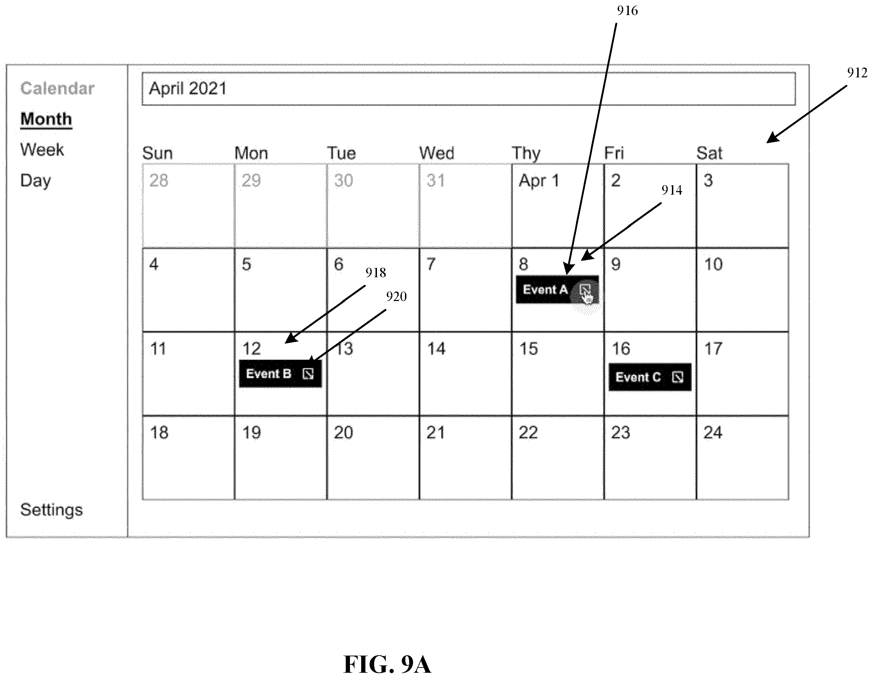

**FIGS. 9A-9C** are illustrations of example graphical user interfaces (GUI) on a client device illustrating generating multiple sub-window in a GUI of a calendar application, in accordance with some aspects of the disclosure. Specifically, **FIG. 9A** shows an example GUI of a calendar application. The GUI includes months as the objects (e.g., month 912 of April 2021). Each month can include multiple records (days), such as record 914 (day 8) and record 918 (day 12). Each record can one or more content items (events, appointments, etc.), such as content item 916 (event A) and content item 920 (event B). Each content item can be selected by user input, and the user interface can be instructed to create a sub-window for the content item.

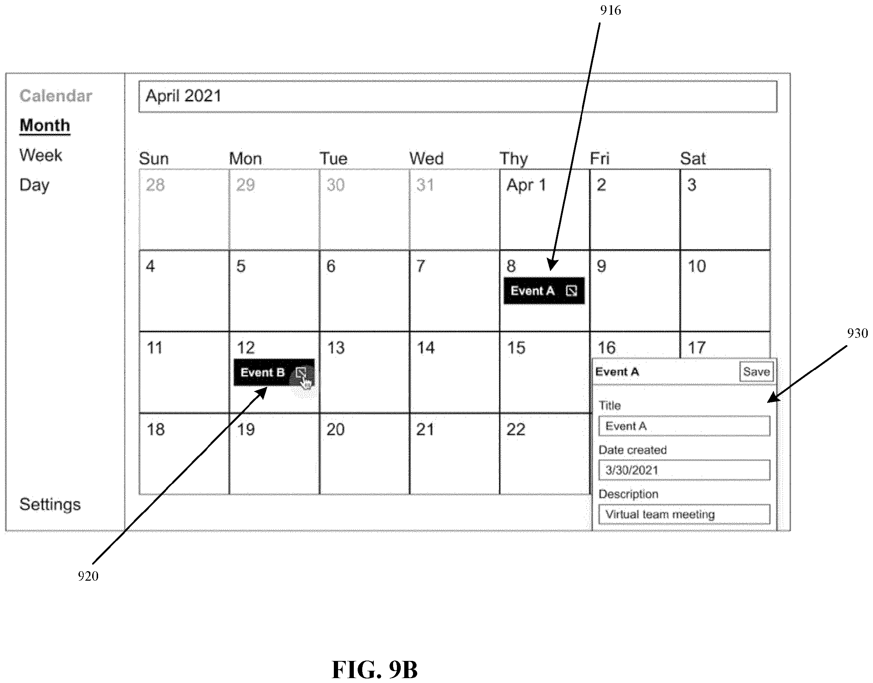

**FIG. 9B** shows example sub-window 930 generated for content item 916. Sub-window 930 includes metadata associated with content item 916, such as a title text field, a description text field, and a data created field.

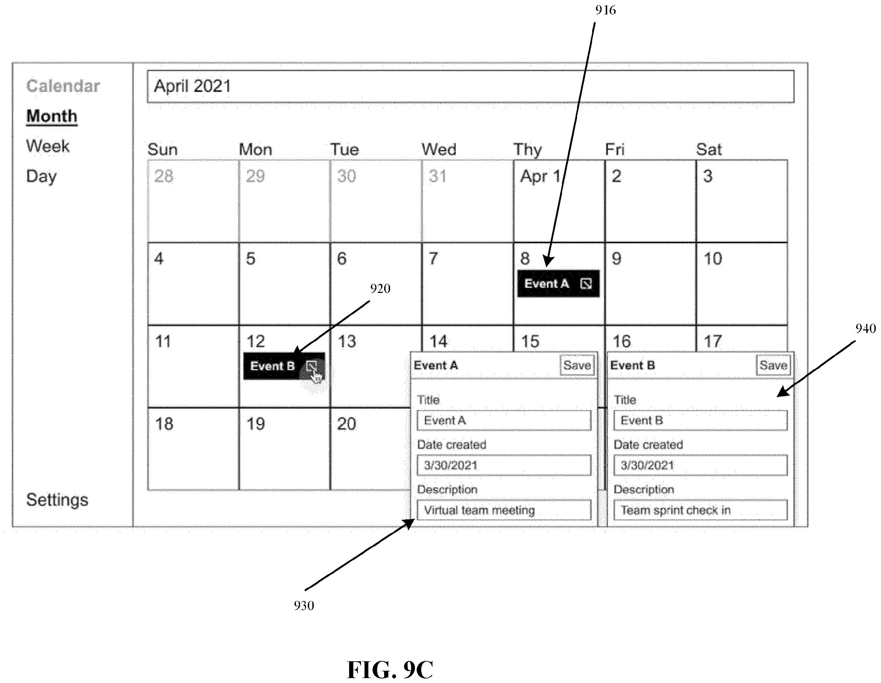

**FIG. 9C** shows example sub-window 940 generated for content item 920. Sub-window 940 includes metadata associated with content item 920, such as a title text field, a description text field, and a data created field.

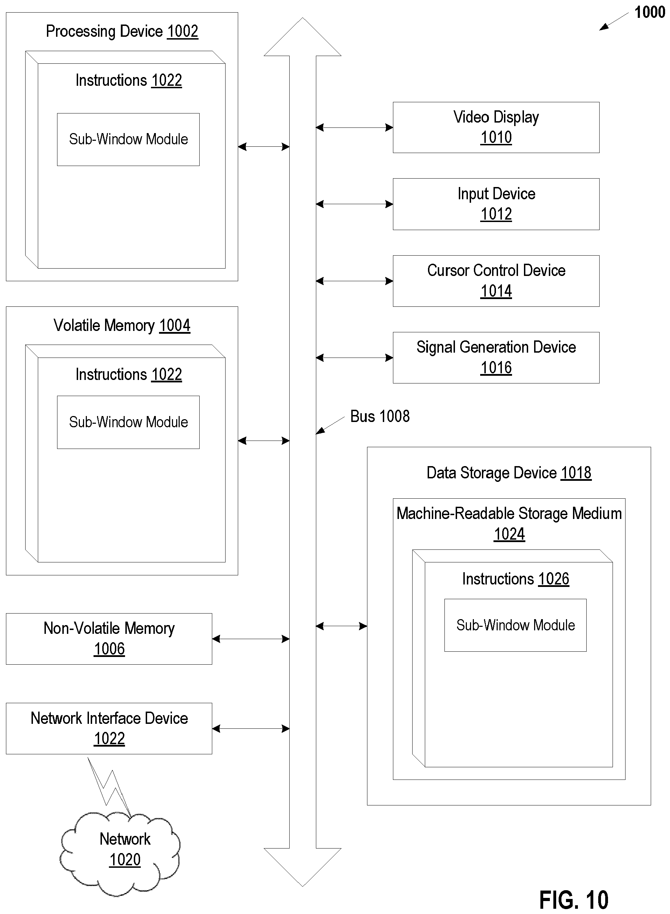

**FIG. 10** depicts a block diagram of a computer system operating in accordance with one or more aspects of the present disclosure. In certain implementations, computer system 1000 can be connected (e.g., via a network, such as a Local Area Network (LAN), an intranet, an extranet, or the Internet) to other computer systems. Computer system 1000 can operate in the capacity of a client device. Computer system 1000 can operate in the capacity of a server or a client computer in a client-server environment. Computer system 1000 can be provided by a personal computer (PC), a tablet PC, a set-top box (STB), a Personal Digital Assistant (PDA), a cellular telephone, a web appliance, a server, a network router, switch or bridge, or any device capable of executing a set of instructions (sequential or otherwise) that specify actions to be taken by that device. Further, the term "computer" shall include any collection of computers that individually or jointly execute a set (or multiple sets) of instructions to perform any one or more of the methods described herein.

In a further aspect, the computer system 1000 can include a processing device 1002, a volatile memory 1004 (e.g., random access memory (RAM)), a non-volatile memory 1006 (e.g., read-only memory (ROM) or electrically-erasable programmable ROM (EEPROM)), and a data storage device 1018, which can communicate with each other via a bus 708.

Processing device 1002 can be provided by one or more processors such as a general purpose processor (such as, for example, a complex instruction set computing (CISC) microprocessor, a reduced instruction set computing (RISC) microprocessor, a very long instruction word (VLIW) microprocessor, a microprocessor implementing other types of instruction sets, or a microprocessor implementing a combination of types of instruction sets) or a specialized processor (such as, for example, an application specific integrated circuit (ASIC), a field programmable gate array (FPGA), a digital signal processor (DSP), or a network processor).

Computer system 1000 can further include a network interface device 1022. Computer system 1000 also can include a video display unit 1010 (e.g., an LCD), an input device 1012 (e.g., a keyboard, an alphanumeric keyboard, a motion sensing input device, touch screen), a cursor control device 1014 (e.g., a mouse), and a signal generation device 1016.

Data storage device 1018 can include a non-transitory machine-readable storage medium 1024 on which can store instructions 1026 encoding any one or more of the methods or functions described herein, including instructions encoding components of client device of **FIG. 1** for implementing methods 400 and 500.

Instructions 1026 can also reside, completely or partially, within volatile memory 704 and/or within processing device 1002 during execution thereof by computer system 1000, hence, volatile memory 1004 and processing device 1002 can also constitute machine-readable storage media.

While machine-readable storage medium 1024 is shown in the illustrative examples as a single medium, the term "computer-readable storage medium" shall include a single medium or multiple media (e.g., a centralized or distributed database, and/or associated caches and servers) that store the one or more sets of executable instructions. The term "computer-readable storage medium" shall also include any tangible medium that is capable of storing or encoding a set of instructions for execution by a computer that cause the computer to perform any one or more of the methods described herein. The term "computer-readable storage medium" shall include, but not be limited to, solid-state memories, optical media, and magnetic media.

The methods, components, and features described herein can be implemented by discrete hardware components or can be integrated in the functionality of other hardware components such as ASICS, FPGAs, DSPs or similar devices. In addition, the methods, components, and features can be implemented by firmware modules or functional circuitry within hardware devices. Further, the methods, components, and features can be implemented in any combination of hardware devices and computer program components, or in computer programs.

Unless specifically stated otherwise, terms such as "receiving," "determining," "sending," "displaying," "identifying," "selecting," "excluding," "creating," "adding," or the like, refer to actions and processes performed or implemented by computer systems that manipulates and transforms data represented as physical (electronic) quantities within the computer system registers and memories into other data similarly represented as physical quantities within the computer system memories or registers or other such information storage, transmission or display devices. Also, the terms "first," "second," "third," "fourth," etc. as used herein are meant as labels to distinguish among different elements and can not have an ordinal meaning according to their numerical designation.

Examples described herein also relate to an apparatus for performing the methods described herein. This apparatus can be specially constructed for performing the methods described herein, or it can comprise a general purpose computer system selectively programmed by a computer program stored in the computer system. Such a computer program can be stored in a computer-readable tangible storage medium.

The methods and illustrative examples described herein are not inherently related to any particular computer or other apparatus. Various general purpose systems can be used in accordance with the teachings described herein, or it can prove convenient to construct more specialized apparatus to perform methods 400 and 500 and/or each of its individual functions, routines, subroutines, or operations. Examples of the structure for a variety of these systems are set forth in the description above.

The above description is intended to be illustrative, and not restrictive. Although the present disclosure has been described with references to specific illustrative examples and implementations, it will be recognized that the present disclosure is not limited to the examples and implementations described. The scope of the disclosure should be determined with reference to the following claims, along with the full scope of equivalents to which the claims are entitled.

## Claims

1. A computer-implemented method comprising:
providing, for presentation on a screen of a client device, a user interface associated with a first session of an application, the user interface associated with the first session of the application comprising a plurality of content items;
receiving, via the user interface associated with the first session of the application, a user selection of a first content item of the plurality of content items;
providing, for presentation within the user interface associated with the first session of the application, a sub-window for the first content item while keeping at least a portion of the user interface associated with the first session of the application visible on the screen of the client device;
receiving user input indicating a request to initiate a second session of the application; and
in response to receiving the user input, causing a user interface associated with the second session of the application to be presented together with the sub-window for the first content item.

2. The method of claim 1, wherein:
the user interface associated with the first session of the application corresponds to an application view comprising a set of objects;
each object in the set of objects is associated with a plurality of records;
a first record of the plurality of records comprises the first content item; and
the application view is defined by application view data.

3. The method of claim 2, wherein the application view data is modified to include information identifying the sub-window for the first content item when the sub-window for the first content item is presented in the user interface associated with the first session of the application.

4. The method of claim 3, wherein the modified application view data is used to present the user interface associated with the second session of the application together with the sub-window for the first content item.

5. The method of any one of claims 2 to 4, further comprising:
receiving user input indicating a request of a user to switch to a second application view comprising a different set of objects; and
causing a user interface corresponding to the second application view to be presented to the user together with one or more sub-windows that were opened for the user during a previous session associated with the second application view.

6. The method of any one of the preceding claims, further comprising:
receiving, via the user interface associated with the second session of the application, a user selection of a second content item of the plurality of content items; and
providing, for presentation within the user interface associated with the second session of the application, a second sub-window for the second content item together with the first sub-window for the first content item while keeping at least a portion of the user interface associated with the second session of the application visible to a user.

7. The method of claim 6, further comprising:
receiving, via the user interface associated with the second session of the application, a user request to close the first sub-window for the first content item; and
causing the first sub-window for the content item to be removed from the user interface associated with the second session of the application while continuing to present the second sub-window for the second content item together and while keeping at least a portion of the user interface associated with the second session of the application visible to the user

8. The method of any one of claims 2 to 5, further comprising:
receiving, via the sub-window, user input providing an update for the content item;
modifying the content item in the sub-window based on the user input; and
upon a user request to save the modified content item, causing the update for the content item to be propagated to the record associated with a respective object from the set of obj ects.

9. The method of any one of the preceding claims, wherein the user input indicating the request to initiate the second session of the application is received via the client device, and the user interface associated with the second session of the application is presented together with the sub-window for the first content item on the screen of the client device.

10. The method of any one of claims 1 to 8, wherein the user input indicating the request to initiate the second session of the application is received via a different client device, and the user interface associated with the second session of the application is presented together with the sub-window for the first content item on a screen of the different client device.

11. The method of any one of the preceding claims, wherein the application is one of a browser application, an email application, a calendar application, a collaborative database application, or a file storage application.

12. The method of any one of claims 2 to 5, wherein the first session of the application corresponds to the application view and comprises a sequence of communications between a session start event and a session end event, and a first session state represented by the application view data.

13. The method of claim 12, wherein the session start event is triggered by a user login into the application view of the application, and the session end event is triggered by a user logout from the application view of the application, and wherein each of the user login and user logout occurs automatically or in response to a user request.

14. A system comprising:
a memory; and
a processing device, coupled to the memory, to perform the method of any one of the preceding claims.

15. A non-transitory computer-readable medium comprising instructions that, responsive to execution by a processing device, cause the processing device to perform the method of any one of claims 1 to 13.
